# EUROPEAN PATENT APPLICATION

(11) **EP 3 499 445 A1**
(43) Date of publication of application: **19.06.2019**
(21) Application number: 17207461.9
(22) Date of filing: 14.12.2017
(51) Int. Cl.: G06Q 20/40, G06Q 20/02, G06Q 20/38

(54) **METHOD FOR CONTROLLING TRANSACTIONS IN A DISTRIBUTED LEDGER**

(71) Applicant: Kroin AG, 6300 Zug (CH)
(72) Inventor: DE FILIPPI, Giotto, St. Julians, stj 1471 (MT); ZEGNA, Diego, 6300 Zug (CH)
(74) Representative: Stolmár & Partner Intellectual Property GmbH

(57) **Abstract**

The present invention relates to a method (3000) for controlling transactions in a network (2000) implementing a distributed ledger, the network comprising a plurality of transaction addresses (1101-1103) and at least one certification address (2300), the method comprising the steps of: setting (S3100) an assigned validation level to at least a first transaction address, by the certification address, setting (S3200) a requested validation level to at least a second transaction address, by the second transaction address, when a transaction is requested between the first transaction address and the second transaction address, comparing (S3300) the assigned validation to the required validation level, by the second transaction address, allowing (S3400) or denying (S3500) the transaction based on the output of the comparing step.

## Description

The present invention generally relates to a method for controlling transactions in a network implementing a distributed ledger. More specifically, it relates to the introduction of a validation level, based on which transaction among addresses can be allowed or denied.

### Prior art

Distributed ledgers are becoming a more common technology for certifying and tracking several kinds of assets, such as cryptocurrencies, contracts, but also documents such as certifications, medical records, identify documents, etc. The distributed ledgers also provide means for recording transactions related to assets or documents. Namely modification to the asset or documents, be it a modification to its content or to its owner, can be recorded in a reliable manner by a distributed ledger.

Several kinds of distributed ledgers are available, based on different technologies, such as blockchain, Hashgraph, etc. In general they all share the common concept that the network implementing the distributed ledger comprises a plurality of transaction addresses and a plurality of ledger computing nodes. The transactions among the transaction addresses are recorded by the ledger computing nodes with a computationally intensive approach, which provides the security of the distributed ledgers with respect to brute force hacker attacks.

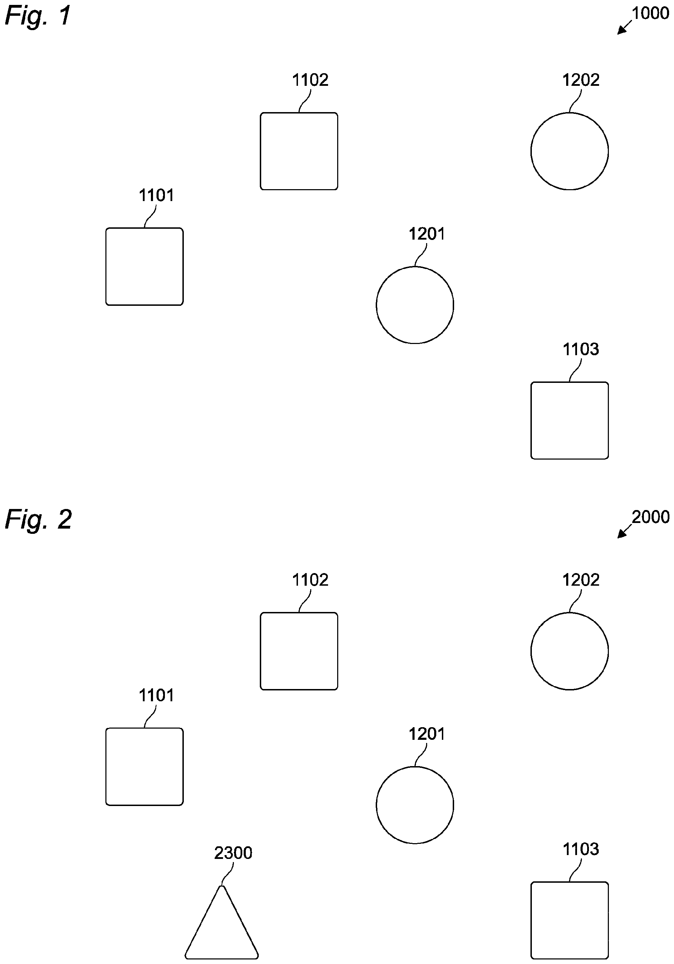

Figure 1 schematically illustrates a network 1000 implementing a distributed ledger in accordance with the state of the art, comprising a plurality of transaction addresses 1103-1103 and a plurality of ledger computing nodes 1201-1202. The distributed ledger could be, for instance, Ethereum. In this case the ledger computing nodes 1201-1202 are configured to run one or more smart contracts for allowing any of the transaction addresses 1101-1103 to perform several kinds of transactions which are then recorded in the distributed ledger, in the case of Ethereum implemented with a blockchain implementation.

In general, in distributed ledgers such as the one illustrated in figure 1, any transaction address 1101-1103 can perform transactions with any other transaction address 1101-1103. One characteristic of distributed ledgers such as those illustrated in figure 1 consists in the fact that the transaction addresses 1101-1103 are identified as address in the network 1000 and remain otherwise anonym. While this provides an advantage in guaranteeing anonymity for several kinds of transactions, it becomes a limitation when the transactions relate to financial services. For instance, several financial institutions, such as banks, are not allowed to carry out a transaction with an anonymous address but require the owner of the address to be known. Moreover, the owner of the address may need to provide the financial institution with several kinds of validations, from a simple identity check to anti-money-laundering compliance, in order for the financial institution to carry out a transaction with the specific transaction address.

This requirement cannot be easily implemented by the distributed ledger illustrated in figure 1. In particular, one possibility for overcoming this problem could consist in the owner of a transaction address, for instance transaction address 1101, to contact in a non-anonymous manner the financial institution owning the transaction address 1102 with which the owner of transaction address 1101 intends to carry out a transaction. This contact for the purpose of certification could, for instance, be carried out by the owner of the transaction address 1101 by sending an email, calling, or physically contacting the owner of transaction address 1102, so as to allow the latter to certify the transaction address 1101.

This contact would therefore need to happen outside of the network 1000, for instance by means of emails, internet or other technical means. Only after the certification could then transaction address 1101 carry out a transaction with transaction address 1102. This approach is however complicated and inefficient in that it requires use of an additional network, for instance the internet or the telephone, on top of network 1000, or in that it requires the owner of transaction address 1101 to personally contact the owner of transaction address 1102. Moreover, it requires the owner of transaction address 1102 to keep track of the information received for the certification of the transaction address 1101. That is, the owner of transaction address 1102 must first receive the certification information outside of network 1000, for instance documents proving the personal details of the owner of transaction address 1101, and secondly assign this information to transaction address 1101, so as to allow transactions to be performed with transaction address 1101. Further, if the owner of transaction address 1101 later intends to carry out a transaction with transaction address 1103, which also happens to be owned by a financial institution similar to that of transaction address 1102, the certification process has to be repeated.

The present invention has been developed in view of the above problems and it is an object thereof to provide a more efficient use of the network 1000 allowing to improve on at least some of the drawbacks of the prior art.

### Summary of the invention

The present invention generally relies on the principle that an additional kind of entity can be added to the network so as to operate as a certification address.

The transaction addresses can thereafter be associated to an assigned validation level, which is set by the certification address, and to a requested validation level, which is set by the transaction address. This allows transactions to be carried out depending on a comparison of the requested validation level of a first transaction address and the assigned validation level of a second transaction address. In other words, the present invention allows solving the certification problem described above without making use of an external network and making more efficient use of the computational resources of the network implementing the distributed ledger.

In particular, one embodiment of the invention can relate to a method for controlling transactions in a network implementing a distributed ledger, the network comprising a plurality of transaction addresses and at least one certification address, the method comprising the steps of: setting an assigned validation level to at least a first transaction address, by the certification address, setting a requested validation level to at least a second transaction address, by the second transaction address, when a transaction is requested between the first transaction address and the second transaction address, comparing the assigned validation level to the required validation level, by the second transaction address or by the distributed ledger, allowing or denying the transaction based on the output of the comparing step.

In some embodiments, the step of setting the assigned validation level can be performed by registering the assigned validation level in the distributed ledger in association with the first transaction address.

In some embodiments, the method can further comprise the step of setting a maximum transaction amount to at least the second transaction address, by the second transaction address, and, in the comparing step, an amount of the requested transaction can be compared to the maximum transaction amount.

In some embodiments, in the setting step, the second transaction address can set a maximum transaction amount associated to a country of an owner of the first transaction address.

In some embodiments, in the setting step, the second transaction address can set a maximum transaction amount associated to the assigned validation level of the first transaction address.

### Short description of the figures

Figure 1 schematically illustrates a network 1000 implementing a distributed ledger in accordance with the state of the art;
Figure 2 schematically illustrates a network 2000 implementing a distributed ledger in accordance with an embodiment of the invention;
Figure 3 schematically illustrates a method 3000 in accordance with an embodiment of the invention;
Figure 4 schematically illustrates a method 3000 in accordance with an embodiment of the invention.

### Detailed description of preferred embodiments

Although the invention can find application with different kind of distributed ledgers, in the following description embodiments can be explained, for ease of understanding through examples, with reference to specific embodiments relating to an Ethereum implementation. It will however be understood that the invention is not limited to this specific implementation.

Figure 2 schematically illustrates a network 2000 implementing a distributed ledger in accordance with an embodiment of the invention. Although only the various elements 1101-1103, 1201-1202 and 2300 are schematically illustrated, it will be clear that those elements can be connected to each other by means of a network, such as the Internet. The interconnections are however not illustrated, for clarity of representation.

The network 2000 differs from network 1000 due to the presence of certification address 2300. Certification address 2300 could be, in practice, implemented by any electronic equipment capable of exchanging information within network 2000, for instance, a computer. In general, certification address 2300 is capable of exchanging information with the remaining elements in the network 2000, in particular with transaction addresses 1101-1103. It will furthermore be clear that a plurality of certification addresses 2300 can be present, operating as it will be described for the single certification address 2300 below.

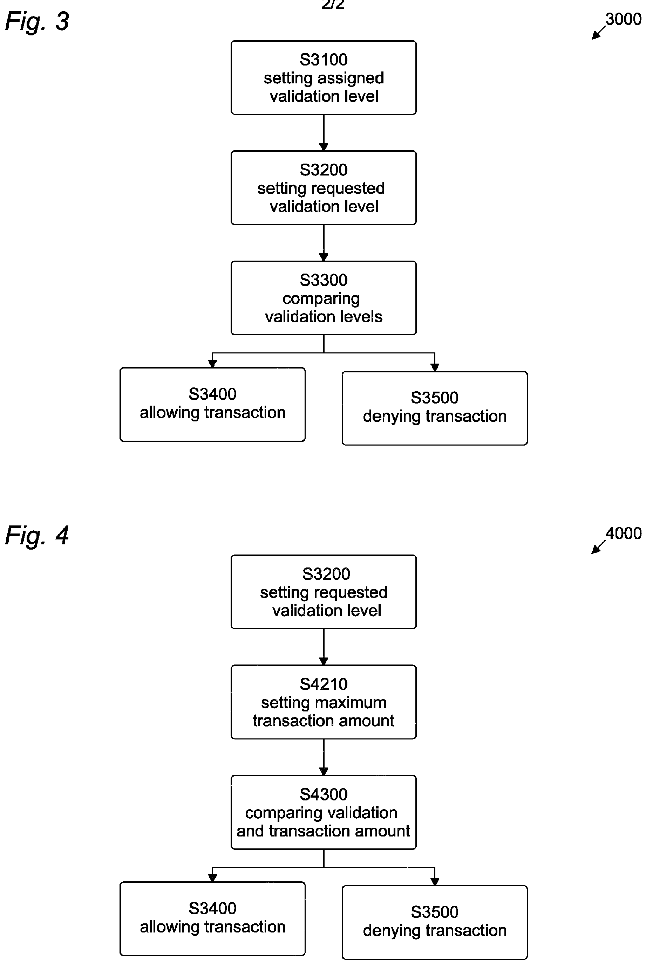

The presence of certification address 2300 allows the method 3000, which is schematically illustrated in figure 3, to be implemented. More specifically, method 3000 is a method for controlling transactions in the network 2000 implementing a distributed ledger. As visible in figure 2, the network 2000 comprises at least plurality of transaction addresses 1101-1103 and at least one certification address 2300.

The method 3000 comprises a first step S3100 of setting an assigned validation level to at least a first transaction address, for instance transaction address 1101, by the certification address 2300. In particular, in this step, the certification address 2300 assigns a validation level which can be associated to the first transaction address 1101 in the distributed ledger. The validation level can be defined, for instance, in a scale from 1 to 9, or 6 to 9, depending on the related entity, such as for individuals or companies, and is decided by the certification address 2300.

How the certification address 2300 decides what validation level is to be associated to the first transaction address 1101 can be implemented in several manners. For instance, the owner of the first transaction address 1101 can contact the person or entity owning the certification address 2300 and provide them with all the required information for being granted a certain validation level. For instance, a predefined validation level may indicate that the first transaction address 1101 can perform transactions which are limited to private persons. In this case the owner of first transaction address 1101 will have to provide the owner of the certification address 2300 with proof of being a private person. Still exemplary, if a predetermined validation level indicates that the owner of that transaction address has passed anti-money laundering checks, it will be necessary for the owner of that address to show to the owner of the certification address 2300 the required anti-money laundering compliance.

While step S3100 may still require the transmission of the information from the owner of first transaction address 1101 to the owner of certification address 2300 through a network external to the network 2000, the present invention still advantageously allows a reduction in the use of the external resources since the owner of the first transaction address 1101 only has to revert once to such external network, as will be clear in the following, thus making a more efficient use of the combined computational resources of the network 2000 and of the external network. In particular, once the assigned validation level has been set by the certification address 2300, the transaction address 1101 does not need to certify itself for each transaction and can perform transaction with any other transaction address which recognizes the validity of the certification performed by the certification address 2300.

The method further comprises a step S3200 of setting a requested validation level to at least a second transaction address, for instance transaction address 1102, by the second transaction address 1102 itself. In other words, each transaction address 1101-1103 is capable of setting its own requested validation level for determining the minimum validation level which is required for operating with the transaction address. The setting of the validation level and its association to the transaction address may be obtained, by the transaction address, by recording in the distributed ledger the intended validation level in association with its own transaction address. Alternatively, or in addition, the requested validation level may be stored locally at the electronic equipment implementing transaction address 1102, without recording it into the distributed ledger.

One advantage of the former approach, namely recording the requested validation level in the distributed ledger in association with the transaction address 1102 consists in an enhanced visibility over the operation of the transaction address 1102. Moreover, in some embodiments, regulatory compliance can be ensured by the distributed ledger, as will be described below, since the decision on whether to allow transaction is left to the distributed ledger based on the publicly available assigned validation level and requested validation level.

Step 3200 allows each transaction address to regulate the validation level which it requires for accepting transactions from other transaction addresses in the network 2000. For instance, if a transaction address corresponds to a private person, the private person may decide to have a very low validation level required for performing transaction. On the other hand, if the transaction address corresponds to a financial institution, such as a bank, local regulations may force the transaction address to set a higher validation level for accepting transactions from other transaction addresses in the network 2000.

The method 3000 further comprises a step S3300 of comparing the assigned validation to the required validation level, carried out by the second transaction address 1102 or, in some embodiments, by the distributed ledger. In particular, when a transaction is requested by the first transaction address 1101 to the second transaction address 1102, the second transaction address 1102 is informed of the assigned validation level of the first transaction address 1101, for instance by the transaction address 1101 itself or by referring to the distributed ledger. Upon receipt of the assigned validation level, the second transaction address 1102 can compare the assigned validation level to its own the required validation level and then decide to allow the transaction, in an allowing step S3400, or block the transaction, in a denying step S3500, based on the output of the comparing step S3300. For instance, the second transaction address 1102 could allow the transaction only if the assigned validation level is higher than, or equal to, the required validation level.

In those embodiments in which the step S3300 is carried out by the distributed ledger, the operation is similar by the comparing step is implemented by the ledger, for instance by the ledger computing nodes 1201-1202. This ensures that the transaction address 1102 cannot work around its own required validation level to accept transactions from nodes which do not satisfy the required validation level. In those embodiments therefore also steps S3400 and S3500 may be carried out by the distributed ledger.

In this manner it is advantageously possible for the second transaction address 1102 to accept transactions only from those transaction addresses having a validation level, set by the certification address 2300, to a level sufficient for the regulatory requirements of the second transaction address 1102. The setting of the validation level by the certification address 2300 and its association to the first transaction address 1101 is particularly advantageous since it allows the first transaction address 1101 to request transactions to all other addresses in network 2000 without having to newly certify itself every time a transaction is requested. Moreover, this implementation allows the second transaction address 1102 to comply with all regulatory requirements, by simply setting the required validation level. Furthermore, since the certification operation is performed by the certification address 2300, and not by the transaction addresses 1101-1103, regulatory compliance of the certification process can be ensured by a centralized control over certification address 2300.

Thanks to this implementation, the technical drawback of network 1000 of the prior art, requesting the continuous use of external network for exchanging certification information every time a transaction was needed, can be avoided. In this manner the computational resources of the network 2000 and, if needed, the external network, can be more efficiently used. Moreover, the speed at which transactions can be performed in a certified manner after the setting step S3100 is significantly increased, thanks to the avoidance of a separate certification process for each transaction.

Figure 4 schematically illustrates parts of a method 4000 in accordance with a further embodiment of the invention. In particular, the method 4000 differs from method 3000 in that step S4200 is additionally performed, either before or, as illustrated, after the step S3200. Moreover, step S3300 is replaced by step S4300.

Similarly to step S3200, the second transaction address 1102 can perform a step S4210 of setting one or more maximum transaction amounts, which the transaction address 1102 can accept from a given transaction address 1101. Similarly to step S3200 the setting step can be performed by the transaction address 1102 by recording in the distributed ledger the maximum transaction amounts and/or by recording them locally on the electronic equipment implementing the transaction address 1102. Moreover, in step S4300, in addition to the characteristics of steps S3300, an amount of the requested transaction is compared to the maximum transaction amount, set at step S4210.

In this manner, once a transaction request is received by the second transaction address 1102, the transaction can be performed if the first transaction address 1101 has the appropriate validation level, as already described above, and/or if the amount of the requested transaction is below, or equal to, the maximum transaction amount.

In some embodiments, the second transaction address 1102 can set a plurality of maximum transaction amounts, associated to different parameters, such as the country of the owner of the first transaction address 1101 and/or the validation level of the first transaction address 1101. That is, for instance, second transaction address 1102 can set a maximum transaction amount for transaction addresses 1101 from a first country and a different transaction amount for transaction addresses 1101 from a second, different country. Still in addition, or alternatively, second transaction address 1102 can set a maximum transaction amount for transactions requested by transaction addresses 1101 having a first validation level and a different transaction amount for transaction addresses 1101 having a second, different validation level.

The advantage of this approach consists in that it allows the operation of second transaction address 1102 to keep into account different regulatory constraints among different countries and among different validation levels.

Although different embodiments have been described above as separate and various features have been described in combination with any given embodiment, the present invention in not limited to the embodiments described. To the contrary, singular features from any given embodiment can result into alternative embodiments. Moreover singular features from a plurality of embodiments can be combined so as to result into further alternative embodiments. The scope of the invention is thereby not limited by the illustrated drawing and the described embodiments but is instead defined by the claims.

### List of reference numerals

Figure 1
   1000: network
   1101-1103: transaction address
   1201-1202: ledger computing node
Figure 2
   2000: network
   2300: certification address
Figure 3
   3000: method for controlling transactions
   S3100: setting assigned validation level
   S3200: setting requested validation level
   S3300: comparing validation levels
   S3400: allowing transaction
   S3500: denying transaction
Figure 4
   4000: method for controlling transactions
   S4210: setting maximum transaction amount
   S4300: comparing validation levels and maximum transaction

## Claims

1. A method (3000, 4000) for controlling transactions in a network (2000) implementing a distributed ledger, the network (2000) comprising a plurality of transaction addresses (1101-1103) and at least one certification address (2300), the method (3000, 4000) comprising the steps of:
setting (S3100) an assigned validation level to at least a first transaction address (1101-1103), by the certification address (2300),
setting (S3200) a requested validation level to at least a second transaction address (1101-1103), by the second transaction address (1101-1103),
when a transaction is requested between the first transaction address (1101-1103) and
the second transaction address (1101-1103), comparing (S3300, S4300) the assigned validation level to the required validation level, by the second transaction address (1101-1103) or by the distributed ledger,
allowing (S3400) or denying (S3500) the transaction based on the output of the comparing step (S3300, S4300).

2. The method (4000) according to claim 1, wherein
the step of setting (S3100) the assigned validation level is performed by registering the assigned validation level in the distributed ledger in association with the first transaction address (1101-1103).

3. The method (4000) according to claim 1 or 2, further comprising the step of
setting (S4210) a maximum transaction amount to at least the second transaction address (1101-1103), by the second transaction address (1101-1103),
and wherein, in the comparing step (S4300), an amount of the requested transaction is compared to the maximum transaction amount.

4. The method (4000) according to claim 3, wherein
in the setting step (S4200), the second transaction address (1102) sets a maximum transaction amount associated to a country of an owner of the first transaction address (1101).

5. The method (4000) according to any previous claim, wherein
in the setting step (S4200), the second transaction address (1102) sets a maximum transaction amount associated to the assigned validation level of the first transaction address (1101).
